# NOUVEAU FASCICULE DE BREVET EUROPEEN

(11) **EP 1 736 270 B2**
(45) Date de publication et mention de la décision concernant l'opposition: **20.10.2010**
(45) Mention de la délivrance du brevet: 12.03.2008
(21) Numéro de dépôt: 06290961.9
(22) Date de dépôt: 13.06.2006
(51) Int. Cl.: B23K 9/12

(54) **Soudo-brasage ou soudage TIG avec transfert de métal par pont liquide**
WIG-Schweiss- bzw, Lötverfahren mit Metallübertragung durch eine flüssigmetallbrücke
TIG welding/brazing method with liquid bridge metal transfer

(30) Priorité: 22.06.2005 FR 0551709
(43) Date de publication de la demande: 27.12.2006
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Bertin, M. Pascal, 60240 Chaumont en Vexin (FR); Revel, M. Olivier, 95480 Pierrelaye (FR); Opderbecke, M. Thomas, 95310 Saint Quen L'Aumone (FR)
(74) Mandataire: Pittis, Olivier

(56) Documents cités:
- EP-A2- 1 459 831
- US-A- 3 483 354

## Description

La présente invention concerne un procédé de soudage, préférentiellement robotisé, avec torche TIG et métal d'apport sous forme d'un ou plusieurs fils fusibles, tel que décrit dans le document US-A- 3 483 354.

Il est connu des documents US-A-5512726 et DE-A-3542984, une configuration conventionnelle de torche TIG avec apport de fil fusible, dans laquelle l'amenée du fil fusible dans le bain de fusion est opérée de manière horizontale ou quasi-horizontale de manière à obtenir un transfert de métal fondu en gouttes depuis l'extrémité fusible du fil fondue et vers la zone de soudage, c'est-à-dire les pièces à souder ou soudo-braser ensemble.

Ce type de configuration de torche présente des désavantages. En particulier, la seule force présente pour le transfert du métal vers la zone de soudage étant la gravité, le transfert de métal par gouttes engendre un aspect de cordon irrégulier, un risque de pollution de l'électrode non-fusible en tungstène par contact inopiné avec une (ou des) goutte de métal et parfois des difficultés pour réaliser un travail en position, notamment dans les endroits exigus ou d'accès difficile.

De plus, étant donné que lors de la mise en oeuvre d'un tel procédé, une certaine directivité est nécessaire pour orienter l'amené de fil dans l'axe du joint à souder, le sixième axe du robot portant la torche TIG est bloqué et ses degrés de liberté sont donc limités.

Par ailleurs, il est connu qu'avec ce type de configuration, la productivité du procédé est affectée, notamment en termes vitesse de soudage, vitesse d'amenée de fil et de taux de dépôt.

Le problème qui se pose est alors d'améliorer les procédés de soudage robotisé TIG avec métal d'apport existant pour pouvoir effectuer des soudures à productivité élevée, notamment à une vitesse de soudage d'au moins 50 cm/min, et de bonne qualité, c'est-à-dire absence de projections, silicates et oxydes, de manière à faciliter la robotisation de ces procédés TIG avec métal d'apport et augmenter leurs performances.

Une solution de l'invention est un procédé de soudage à l'arc mettant en oeuvre une torche TIG munie d'une électrode non fusible et un fil d'apport fusible, l'extrémité dudit fil fusible étant progressivement fondue par un arc électrique généré entre l'électrode non fusible et au moins une pièce à souder de manière à réaliser un transfert de métal fondu depuis le fil vers ladite pièce et obtenir ainsi un joint de soudure, caractérisé en ce que l'amenée de fil fusible est opérée selon un angle (α) inférieur à 50° par rapport à l'axe de l'électrode, l'extrémité du fil fusible est guidée et maintenue en permanence à une distance (D) inférieure à 2 mm environ par rapport à l'extrémité de l'électrode en tungstène, et le transfert de métal vers le joint de soudure est opéré par pont liquide de manière à avoir, c'est-à-dire à maintenir pendant le soudage, un contact permanent entre le bain de métal en fusion formant le joint de soudure et l'extrémité fondue du fil d'apport, ledit transfert par pont liquide étant obtenu en choisissant une vitesse de fil pour laquelle la fréquence de goutte est nulle.

Selon le cas, le procédé de l'invention peut comprendre l'une ou plusieurs des caractéristiques suivantes :
- on soude en mettant en oeuvre une vitesse de fil (Vfil) allant jusqu'à 20 m/min, en particulier entre 1 et 10 m/min selon le diamètre de fil mis en oeuvre.
- on soude ensemble plusieurs pièces métalliques.
- l'amenée de fil fusible est opérée selon un angle entre 10 et 25° par rapport à l'axe de l'électrode, de préférence de 15 à 20° environ.
- on guide et on maintient en permanence l'extrémité du fil fusible à une distance inférieure à 1,5 mm par rapport à l'extrémité de l'électrode en tungstène de la torche TIG, de préférence à une distance de l'ordre de 1 mm environ. Toutefois, dans tous les cas, la surface de l'extrémité du fil ne doit pas venir en contact avec l'électrode en tungstène.
- pendant le soudage, on opère une protection gazeuse du joint de soudure en cours de formation, de l'électrode en tungstène et du fil.
- on opère une protection gazeuse avec un gaz choisi parmi l'argon, l'hélium, l'azote et les mélanges d'argon et d'hydrogène.
- il est mis en oeuvre sur un bras de soudage robotisé portant une torche TIG à électrode non fusible et des moyens d'amenée de fil de soudage fusible ou en soudage manuel ou automatique.
- il est mis en oeuvre pour souder ou braser une ou plusieurs pièces en acier, notamment en acier galvanisé ou zingué, de l'aluminium, des aciers inoxydables ou d'autres matériaux métalliques.
- l'intensité du courant alimentant la torche TIG est comprise entre 10 A et 350 à 400 A, et la tension est comprise entre 10 V et 20 V.
- le fil a un diamètre compris entre 0.6 mm et 1.6 mm à une vitesse de fil allant jusqu'à 20 m/min, en fonction du diamètre de fil utilisé.

Le procédé de l'invention repose donc sur le fait de réaliser un transfert de métal fondu sous forme d'un pont liquide ou d'une veine de métal liquide entre le fil d'apport et la zone à souder de manière à obtenir un contact permanent entre le bain de métal en fusion et le métal d'apport.

Dit autrement, le transfert de métal ne se fait pas goutte par goutte, comme dans l'art antérieur, mais selon un pont liquide de métal en fusion.

Le transfert par pont liquide selon l'invention peut être obtenu dans une plage de paramètres de vitesse d'amenée de fil large et élevée par rapport aux procédés TIG conventionnels.

Néanmoins, ce type de transfert peut être difficilement obtenu par une configuration de torche conventionnelle car, dans une telle torche, le fil est dirigé d'une manière parallèle ou horizontale par rapport à la surface de la ou des pièces à souder et touche donc le bain de fusion sans transférer dans l'arc.

De là, le procédé de l'invention est préférentiellement mis en oeuvre avec une torche avec fil fusible traversant la paroi de la buse selon un angle (α) de moins de 50°, par exemple une torche similaire ou identique à celle décrite dans le document EP-A-1459831.

L'amenée de fil, qui est intégrée à la torche, se fait selon un angle (α) de l'ordre de généralement 10° à 20°, par exemple de l'ordre de 15° à 20°, par rapport à l'axe de l'électrode non fusible de la torche et ce, en maintenant une distance faible entre l'extrémité du fil et l'extrémité du cône de l'électrode en tungstène, par exemple environ 1 mm ou au diamètre de fil d'apport.

Dans tous les cas, pour obtenir un transfert de métal par pont liquide efficace, l'extrémité du fil fusible est guidée et maintenue en permanence à une distance D inférieure à 2 mm environ par rapport à l'extrémité de l'électrode en tungstène, c'est-à-dire que la distance entre la surface externe du fil fusible et l'électrode ne doit pas excéder 2 mm environ, de préférence être de l'ordre de 1 mm. En effet, si la distance D fil/électrode devient trop importante, c'est-à-dire supérieure à 2 mm, il devient très difficile, voire impossible, d'obtenir un transfert par pont liquide efficace et durable.

La configuration d'une telle torche permet donc la mise en oeuvre du procédé de transfert de métal par pont liquide en soudage robotique, automatique et manuel.

Une variante de l'application peut être une configuration de torche avec deux amenées de fils situées en faces opposées et perpendiculaires au plan de joint. Ceci permet d'effectuer des applications de rechargement ou être appliqué à la réalisation de cordons très larges car cela permet d'accroître la tolérance au jeu entre les pièces à souder.

Le transfert par pont liquide selon l'invention présente les avantages suivants :
- un point d'impact en dessous de l'arc, ce qui facilite le positionnement de la torche.
- un transfert ininterrompu de métal bien dirigé dans le bain.
- un aspect esthétique du cordon de soudage de haute qualité.
- une présence constante d'une force de transfert par tension de surface facilite le travail en position.
- une facilité de réglage du paramètre de vitesse fil puisqu'un surplus de fil peut être absorbé dans le bain.
- une réalisation de cordons de soudage multi-directionnels sans changement d'orientation du fil au niveau de la torche TIG.
- le fil traverse les zones les plus chaudes de l'arc, ce qui a un effet de préchauffage sur le fil et implique un rendement et une vitesse accrues. Ce phénomène s'apparente au procédé « fil chaud », décrit par US-A-2791673 où le préchauffage est réalisé par effet joule dans le métal d'apport. Cependant, selon l'invention, l'énergie de préchauffage est apportée directement par l'arc électrique et non par une source énergétique différente comme dans le procédé « fil chaud ».
- après soudage, à l'extinction de l'arc, le fil est taillé en pointe, ce qui facilite la fusion du fil à la réalisation d'un nouveau cordon.
- une possibilité de réaliser des synergies de soudage, comme pour le procédé de soudage MIG/MAG. La vitesse de fil préférée est donnée en fonction des différents paramètres choisis par l'opérateur : matière à assembler, nature et diamètre du fil d'apport, intensité, gaz de protection, vitesse de soudage....

L'invention va être mieux comprise grâce aux explications données ci-après avec références aux figures illustratives annexées.

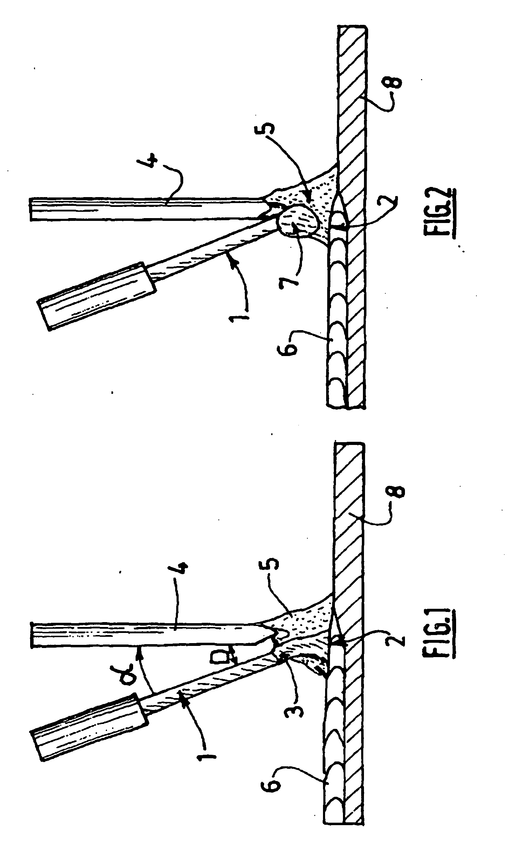

La Figure 1 illustre ce que l'on entend par « transfert par pont liquide » selon l'invention, à savoir un passage ininterrompu du métal d'apport 3 qui est fondu dans l'arc 5 électrique généré par l'électrode 4 en tungstène entre l'extrémité du fil d'apport 1 et le bain de métal en fusion 2 par le biais d'une veine ou pont de métal liquide 3 en fusion, de manière à obtenir le joint de soudure 6 souhaité entre les pièces 8 à assembler par soudage.

Comme on le voit, l'arrivée du fil 1 fusible se fait selon un angle (α) de l'ordre de généralement 10° à 20°, par exemple de l'ordre de 15° à 20°, par rapport à l'axe de l'électrode 4 non fusible en tungstène et la surface ou extrémité du fil fusible 1 est guidée et maintenue en permanence à une distance (D) inférieure à 2 mm par rapport à la surface de l'extrémité de l'électrode 4 en tungstène.

La Figure 2 schématise un transfert par goutte 7 selon l'art antérieur. Dans ce cas, il n'existe aucun pont liquide permanent entre l'électrode 4 et le bain de soudure 2 et, par ailleurs, l'extrémité du fil fusible n'est habituellement pas guidée ou maintenue en permanence à une distance inférieure à 2 mm par rapport à l'extrémité conique de l'électrode.

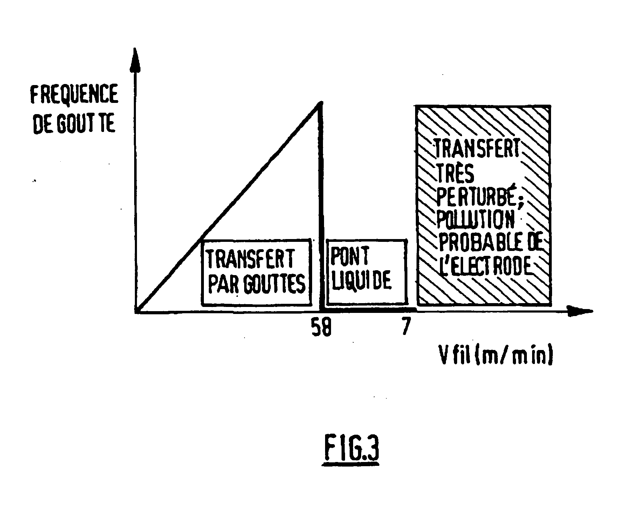

La figure 3 illustre la fréquence des gouttes en fonction de la vitesse de fil pour une intensité de 200 A, une vitesse de soudage de 2 m/min et un fil de CuSi3 de 1 mm de diamètre.

Dans le domaine du transfert par gouttes l'augmentation de la vitesse de fil entraîne l'augmentation de la fréquence de goutte jusqu'à apparence d'un seuil de passage en transfert par veine liquide à fréquence de goutte nulle.

Le Tableau ci-dessous donne des exemple de paramètres de soudage à adopter pour mettre en oeuvre le procédé de l'invention dans le cas d'une vitesse de soudage (Vs) entre 100 et 200 cm/min et pour un angle de fil de l'ordre de 15° à 20° et une distance (D) électrode/fil d'environ 1 mm.

**Tableau**

| **Matériau soudé** | **Epaisseur (en mm)** | **Gaz** | **Fil** | **U [V]** | **I [A]** | V_{f mini} (m/min) | V_{f max} (m/min) | Vₛ (m/min) | **configu ration** |
|---|---|---|---|---|---|---|---|---|---|
| Acier carbone | 2 | Arcal 10 | G3Si1 ∅1 | 11 | 160 | 1 | 1.6 | 1 | Angle extérieur |
| Acier au carbone galvanisé(10µm) | 1 | Arcal 10 | CuSi3 ∅1 | 13 | 200 | 5.8 | 7 | 2 | Clin |
| Inox 304L | 2 | Arcal 10 | 308 ∅1.2 | 14.5 | 210 | 4.8 | 5.6 | 1.5 | Clin |
| Acier au carbone galvanisé (10µm) | 1 | Arcal 1 | CuA18 ∅1 | 14 | 180 | 5.5 | 6.8 | 1.75 | Clin |
| Acier au carbone | 1 | Arcal 10 | CuSi3 ∅1 | 13 | 150 | 3.2 | 3.8 | 1 | Ligne de fusion |

ARCAL™ 10 est un gaz contenant de l'argon additionné de 2,5% en volume d'hydrogène, et ARCAL™ 1 est un gaz contenant de l'argon pur ; ces gaz sont commercialisés par L'Air Liquide.

Les vitesse de fil minimale (Vf mini) et maximale (Vf maxi) sont celles à appliquer pour atteindre le transfert par pont liquide. En dessous de ces vitesses, on obtient un transfert par gouttes, alors qu'au dessus, on obtient des perturbations du procédé.

Les modes de transfert peuvent être obtenus sur tout type de matériau et sur différents configurations de joint : bout à bout, à clin, angles et bords tombés.

En outre, afin de valider le procédé de l'invention, des test de durée de vie de l'électrode en tungstène ont été réalisés.

Ces tests de durée de vie de l'électrode ont été réalisés sur des pièces en acier galvanisé avec revêtement de zinc en surface de 20 µm d'épaisseur d'abord sans métal d'apport.

Dans ces conditions, on a pu réaliser 240 cordons de 1 m de longueur avec 240 amorçages/cordons et une durée totale de 240 min ont été soudés sans changement d'électrode. Toutefois, après ces 240 amorçages/cordons, l'électrode en tungstène présente à sa partie terminale une usure, à savoir une apparition de nodules de tungstène.

Le test a été répété dans les mêmes conditions mais avec fil fusible d'apport et « pont liquide », conformément à la présente invention.

Dans ce cas, 270 amorçages/cordons ont pu être réalisés, soit 30 cordons de plus et ce, sans apparition notables de nodules en bout d'électrode.

En outre, on a constaté un effet protecteur du fil d'apport contre la pollution de l'électrode par des vapeurs de zinc venant du revêtement des pièces à souder, étant donné que le fil fait « écran » aux vapeurs de zinc et les empêche d'aller polluer l'électrode en tungstène.

Ces essais montrent l'efficacité du procédé de l'invention puisqu'il permet d'augmenter de près de 10% le nombre d'amorçages et donc de cordons réalisables avec une même électrode en tungstène, dans les conditions ci-dessus, c'est-à-dire avec apport de fil fusible.

En optimisant les paramètres et conditions de soudage, on peut même espérer obtenir un gain encore plus important.

Le procédé de l'invention est utilisable pour le soudage de tout type de matériau et sur différentes configurations de joints, notamment bout à bout, à clin, ou angles et bords tombés.

## Revendications

1. Procédé de soudage à l'arc mettant en oeuvre une torche TIG munie d'une électrode (4) non fusible et un fil d'apport fusible (1) l'extrémité dudit fil fusible (1) étant progressivement fondue par un arc électrique (5) généré entre l'électrode non fusible (4) et au moins une pièce (8) à souder de manière à réaliser un transfert de métal fondu depuis le fil vers ladite pièce et obtenir ainsi un joint de soudure (6), l'amenée de fil fusible (1) se faisant selon un angle (α) inférieur à 50° par rapport à l'axe de l'électrode, **caractérisé en ce que** :
- l'extrémité du fil fusible (1) est guidée et maintenue en permanence à une distance (D) inférieure à 2 mm par rapport à l'extrémité de l'électrode (4) en tungstène de la torche TIG, et
- le transfert de métal vers le joint de soudure est opéré par pont liquide (3) de manière à avoir un contact permanent entre le bain (2) de métal en fusion formant le joint de soudure et l'extrémité fondue du fil d'apport (1), ledit transfert par pont liquide étant obtenu en choisissant une vitesse de fil pour laquelle la fréquence de goutte est nulle.

2. Procédé selon la revendication 1, **caractérisé en ce qu**'on soude en mettant en oeuvre une vitesse de fil (Vfil) allant jusqu'à 20 m/min, en particulier entre 1 et 10 m/min.

3. Procédé selon l'une des revendications 1 ou 2, **caractérisé en ce que** l'amenée de fil fusible est opérée selon un angle (α) entre 10 et 25° par rapport à l'axe de l'électrode.

4. Procédé selon l'une des revendications 1 à 3, **caractérisé en ce qu**'on guide et maintien en permanence l'extrémité du fil fusible à une distance (D) inférieure à 1,5 mm par rapport à l'extrémité de l'électrode en tungstène de la torche TIG, de préférence de l'ordre de 1 mm environ.

5. Procédé selon l'une des revendications 1 à 4, **caractérisé en ce que,** pendant le soudage, on opère une protection gazeuse du joint de soudure en cours de formation, de l'électrode en tungstène et du fil.

6. Procédé selon l'une des revendications 1 à 5, **caractérisé en ce qu**'on opère une protection gazeuse avec un gaz choisi parmi l'argon, l'hélium, l'azote et les mélanges d'argon et d'hydrogène.

7. Procédé selon l'une des revendications 1 à 6, **caractérisé en ce qu**'il est mis en oeuvre sur un bras de soudage robotisé portant une torche TIG à électrode non fusible et des moyens d'amenée de fil de soudage fusible ou en soudage manuel ou automatique.

8. Procédé selon l'une des revendications 1 à 7, **caractérisé en ce qu**'il est mis en oeuvre pour souder ou braser une ou plusieurs pièces en acier, notamment en acier galvanisé ou zingué, de l'aluminium, des aciers inoxydables ou d'autres matériaux métalliques.

9. Procédé selon l'une des revendications 1 à 8, **caractérisé en ce que** l'intensité du courant alimentant la torche TIG est comprise entre 10 A et 400 A, et la tension est comprise entre 10 V et 20 V.

10. Procédé selon l'une des revendications 1 à 9, **caractérisé en ce que** le fil a un diamètre compris entre 0.6 mm et 1.6 mm.

11. Procédé selon l'une des revendications 1 à 10, **caractérisé en ce qu**'on soude ensemble plusieurs pièces métalliques.

## Claims

1. Arc welding process employing a TIG torch provided with a non-consumable electrode (4) and a consumable filler wire (1), the end of said consumable wire (1) being progressively melted by an electric arc (5) generated between the non-consumable electrode (4) and at least one workpiece (8) to be welded so as to transfer molten metal from the wire to said workpiece and thus obtain a welded joint (6), the consumable wire (1) being fed in at an angle (α) of less than 50° to the axis of the electrode, **characterized in that**:
- the end of the consumable wire (1) is guided and kept permanently at a distance (D) of less than 2 mm from the end of the tungsten electrode (4) of the TIG torch; and
- metal is transferred to the welded joint via a liquid bridge (3) so that there is permanent contact between the puddle (2) of molten metal forming the welded joint and the melted end of the filled wire (1), said transfer via a liquid bridge being obtained by choosing a wire speed for which the drop frequency is zero.

2. Process according to Claim 1, **characterized in that** the welding is carried out with a wire speed (V_{wire}) ranging up to 20 m/min., in particular between 1 and 10 m/min.

3. Process according to either of Claims 1 and 2, **characterized in that** the consumable wire is fed in at an angle (α) of between 10° and 25° to the axis of the electrode.

4. Process according to one of Claims 1 to 3, **characterized in that** the end of the consumable wire is guided and kept permanently at a distance (D) of less than 1.5 mm, preferably approximately 1 mm, from the end of the tungsten electrode of the TIG torch.

5. Process according to one of Claims 1 to 4, **characterized in that**, during welding, a gas shield is provided around the welded joint being formed, around the tungsten electrode and around the wire.

6. Process according to one of Claims 1 to 5, **characterized in that** a gas shield consisting of a gas chosen from argon, helium, nitrogen and argon/hydrogen mixtures is provided.

7. Process according to one of Claims 1 to 6, **characterized in that** it is carried out on a robotic welding arm carrying a non-consumable-electrode TIG torch and means for feeding it with consumable welding wire, or in manual or automatic welding mode.

8. Process according to one of Claims 1 to 7, **characterized in that** it is carried out in order to weld or braze one or more workpieces made of steel, especially galvanized or zinc-plated steel, aluminium, stainless steel or other metallic materials.

9. Process according to one of Claims 1 to 8, **characterized in that** the current supplied to the TIG torch is between 10 A and 400 A and the voltage is between 10 V and 20 V.

10. Process according to one of Claims 1 to 9, **characterized in that** the wire has a diameter of between 0.6 mm and 1.6 mm.

11. Process according to one of Claims 1 to 10, **characterized in that** several metal workpieces are welded together.

## Patentansprüche

1. Lichtbogenschweißverfahren, das einen WIG-Brenner verwendet, der mit einer nicht schmelzbaren Elektrode (4) und einem schmelzbaren Schweißdraht (1) versehen ist, wobei das Ende des Schmelzdrahts (1) durch einen Lichtbogen (5), der zwischen der nicht schmelzbaren Elektrode (4) und wenigstens einem zu verschweißenden Teil (8) erzeugt wird, progressiv geschmolzen wird, derart, dass eine Übertragung des geschmolzenen Metalls von dem Draht zu dem Teil erfolgt und somit eine Schweißnaht (6) erhalten wird, wobei die Zufuhr des Schmelzdrahts (1) unter einem Winkel (α) kleiner als 50° in Bezug auf die Achse der Elektrode erfolgt, **dadurch gekennzeichnet, dass**:
- das Ende des Schmelzdrahts (1) ständig in einem Abstand (D) kleiner als 2 mm in Bezug auf das Ende der Elektrode (4) aus Wolfram des WIG-Brenners geführt und gehalten wird, und
- die Übertragung des Metalls zu der Schweißnaht durch eine Flüssigkeitsbrücke (3) erfolgt, derart, dass ein ständiger Kontakt zwischen dem Bad (2) aus dem die Schweißnaht bildenden geschmolzenen Metall und dem geschmolzenen Ende des Schweißdrahts (1) vorhanden ist, wobei die Übertragung durch eine Flüssigkeitsbrücke durch Auswahl einer Drahtgeschwindigkeit erfolgt, die eine Tropffrequenz von null aufweist.

2. Verfahren nach Anspruch 1, **dadurch gekennzeichnet, dass** mit einer Drahtgeschwindigkeit (Vfil) bis zu 20 m/min und insbesondere im Bereich von 1 bis 10 m/min geschweißt wird.

3. Verfahren nach einem der Ansprüche 1 oder 2, **dadurch gekennzeichnet, dass** die Zuführung des schmelzbaren Drahts unter einem Winkel (α) im Bereich von 10 bis 25° in Bezug auf die Achse der Elektrode erfolgt.

4. Verfahren nach einem der Ansprüche 1 bis 3, **dadurch gekennzeichnet, dass** das Ende des Schmelzdrahts ständig in einem Abstand (D) kleiner als 1,5 mm in Bezug auf das Ende der Elektrode aus Wolfram des WIG-Brenners, vorzugsweise in der Größenordnung von etwa 1 mm, geführt und gehalten wird.

5. Verfahren nach einem der Ansprüche 1 bis 4, **dadurch gekennzeichnet, dass** während des Schweißens ein gasförmiger Schutz der in der Bildung befindlichen Schweißnaht vor der Elektrode aus Wolfram und vor dem Draht bewirkt wird.

6. Verfahren nach einem der Ansprüche 1 bis 5, **dadurch gekennzeichnet, dass** ein gasförmiger Schutz mit einem Gas bewirkt wird, das aus Argon, Helium, Stickstoff und den Gemischen aus Argon und Wasserstoff gewählt ist.

7. Verfahren nach einem der Ansprüche 1 bis 6, **dadurch gekennzeichnet, dass** es an einem robotisierten Schweißarm, der einen WIG-Brenner mit nicht schmelzbarer Elektrode und Mittel zum Zuführen des schmelzbaren Schweißdrahts trägt, oder als manuelles oder automatisches Schweißen ausgeführt wird.

8. Verfahren nach einem der Ansprüche 1 bis 7, **dadurch gekennzeichnet, dass** es ausgeführt wird, um ein oder mehrere Teile aus Stahl, insbesondere aus galvanisiertem oder verzinktem Stahl, aus Aluminium, aus Edelstählen oder aus anderen metallischen Materialien zu verschweißen oder zu verlöten.

9. Verfahren nach einem der Ansprüche 1 bis 8, **dadurch gekennzeichnet, dass** die Stärke des Stroms, mit der der WIG-Brenner versorgt wird, im Bereich von 10 A bis 400 A liegt und die Spannung im Bereich von 10 V bis 20 V liegt.

10. Verfahren nach einem der Ansprüche 1 bis 9, **dadurch gekennzeichnet, dass** der Draht einen Durchmesser im Bereich von 0,6 mm bis 1,6 mm hat.

11. Verfahren nach einem der Ansprüche 1 bis 10, **dadurch gekennzeichnet, dass** mehrere metallische Teile gemeinsam verschweißt werden.
